# EUROPEAN PATENT SPECIFICATION

(11) **EP 1 478 550 B1**
(45) Date of publication and mention of the grant of the patent: **10.05.2006**
(21) Application number: 03706570.3
(22) Date of filing: 25.02.2003
(51) Int. Cl.: B60R 9/10

(54) **LUGGAGE CARRIER FOR VEHICLE**
GEPÄCKTRÄGER FÜR EIN FAHRZEUG
DISPOSITIF DE TRANSPORT DE BAGAGE POUR VEHICULE

(30) Priority: 28.02.2002 IT MO20020051
(43) Date of publication of application: 24.11.2004
(60) Divisional application: 05109802.8
(73) Proprietor: F.LLI MENABO' S.R.L., 42025 Cavriago (IT)
(72) Inventor: MENABO', Domenico, I-42029 San Maurizio (IT)
(74) Representative: Luppi, Luigi
(86) International application number: PCT/EP2003/001903
(87) International publication number: WO 2003/072396

(56) References cited:
- DE-A- 19 514 816
- FR-A- 2 668 435
- US-A- 3 710 999
- US-A- 4 428 516

## Description

The invention relates to a luggage carrier for vehicles, i.e. a device suitable for receiving loads, preferably applicable to the rear portion of said vehicles at a door or a boot cowling, provided with an adjusting system that enables said luggage carrier to conform to vehicles with different sizes and shapes.

The rear luggage carriers available at present substantially differ one from the other on the basis of the technical solutions chosen for adapting a same luggage carrier to the plurality of shapes and sizes of the attachment regions of the vehicles generally available on the market.

Examples of such solutions are disclosed in the International

Patent Applications WO 97/30870 e WO 00/76809.

In WO 97/30870 there is proposed a device for modifying the length of the luggage carrier comprising a deformable arm fixed to the lower portion of a frame body of the luggage carrier; a screw adjusting system enables to elastically deform the deformable arm and mutually vary the distance between said arm and said lower portion so as to enable an anchoring portion of said deformable arm to engage itself with the corresponding edge of a vehicle hatchback.

Such luggage carrier shows the disadvantage that, during mounting or dismounting, the screw adjusting system results positioned between the frame body and the lower edge of the hatchback and thus lies at a very uncomfortable position for being reached by the user.

In WO 00/76809 there is instead proposed a luggage carrier comprising frame sections mutually connected by means of telescopic tubes; in this case, by causing the frame sections to telescopically slide one into the other, a variation in the length of the luggage carrier is obtained that enables hook portions of opposite ends of each section to engage with corresponding edge portions of the hatchback.

During the mounting and dismounting steps, the user is requested to apply a certain force for causing the sections to mutually slide as well as for blocking said sections in the desired position by means of a lever closing device, that results in a clear disadvantage.

Luggage carriers for bicycle are further known comprising a frame including a first frame part and a second frame part hinged each other.

The first frame part ends downward in a pair of resting elements designed for being positioned on the rear bumper of the vehicle.

In a middle section of the second frame part there is further hinged a bracket for resting on the rear window of the vehicle, or on the cowling of the rear boot.

At the top of the second frame part there is hinged a rack for supporting the bicycles.

In order to fix the luggage carrier to the vehicle, said luggage carrier must be anchored by means of a plurality of belts that must be properly stretched by the operator one at a time.

Before the belts are stretched, by acting on the hinges arranged between the first and the second part and between the latter and the resting bracket, the respective frame parts must be articulated so that the resting elements and the resting bracket are properly positioned on the prescribed portions of the vehicle.

In addition, by always manually acting, it is necessary to operate on the hinge interposed between the second frame part and the rack in order that the latter is brought in a substantially horizontal position so as to bear the load in proper position.

A drawback of such luggage carriers results in that, the frame parts must be mutually oriented manually by the operator, that therefore must perform a number of manual operations in order to arrange the luggage carrier for the proper mounting position.

In addition, fixing the luggage carrier turns out rather labour intensive, since it is necessary to act singularly on the various belts, that implies a remarkable waste of time and energies.

FR 2668435, which corresponds to the preamble of claim 1, discloses a bicycle-carrier for vehicles, including two U-shaped elements, which are mutually connected by means of a pair of interlocking devices and are arranged for being applied on the rear portion of a vehicle. One of the two U-shaped elements is provided with supporting arms, arranged for supporting the bicycle to be carried. The bicycle-carrier is provided with a number of fixing straps provided with end hooks, by means of which an user can fix the bicycle-carrier to an edge of a boot lid and to a rear bumper of the vehicle.

A drawback of the above-mentioned bicycle-carrier is that the fixing straps have to be individually stretched, which results time-wasting for an user.

Another drawback is that, when the bicycle-carrier is mounted to the vehicle, the boot lid of the latter cannot be opened.

An aim of the present invention is to improve the luggage carriers for vehicles.

A further aim is to provide the user with a luggage carrier that can be easily mounted and dismounted from a vehicle.

A further other aim is to simplify the manual operation required to the user during the step of fitting the luggage carrier on the sizes and shapes of the vehicle whereon it is mounted.

A different aim is to reduce the need for operating on a plurality of belts in order to mount, or to dismount a luggage carrier.

According to the invention, an apparatus is provided as defined in Claim 1.

In an embodiment, the configuration varying means comprises at least one screw tie rod with sleeve.

The invention can be better understood with reference to the enclosed drawings, that illustrate some exemplifying and not restrictive embodiment forms thereof, wherein:
Figure 1 is a perspective view of a luggage carrier, in the version using configuration varying means comprising two screw tie rods and mounted on the rear door of a vehicle;
Figure 2 is a side view of the luggage carrier in Figure 1;
Figure 3 is a perspective view of a luggage carrier, in the version using configuration varying means comprising a single screw tie rod and mounted on the rear door of a vehicle;
Figure 4 is a perspective view of a luggage carrier, like that of Figure 3, but with a different apparatus for supporting the load.

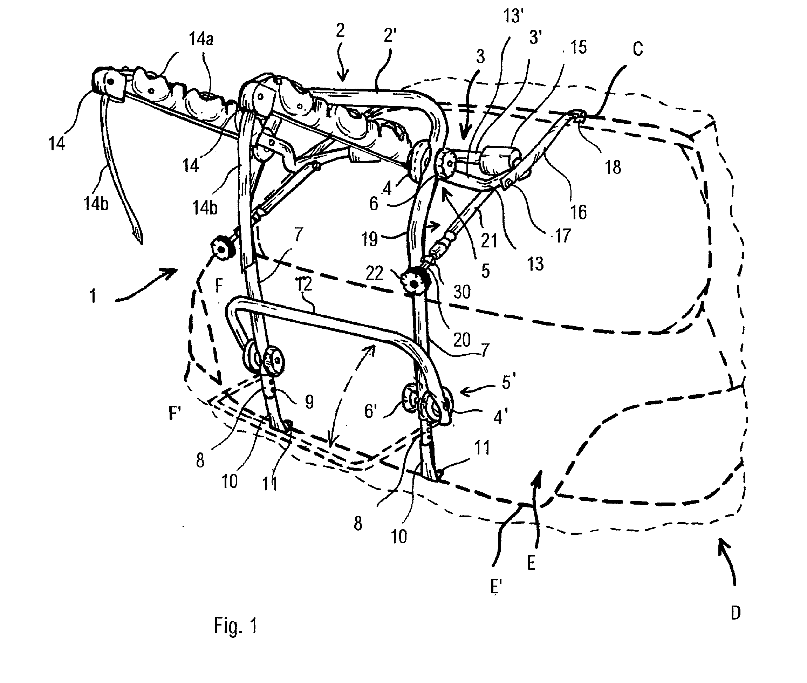

The Figure 1 shows a luggage carrier 1 mounted at the rear end of a vehicle D, represented by dashed line, and comprising a frame body 2 and a further frame body 3. The frame body 2 comprises a U-shaped portion 2', whose two ends extend over two arms 7, each of which is provided with an extractable portion 8, provided with through holes 9; once the luggage carrier 1 has been assembled, the U-shaped portion 2' shows the arms 7 turned downwards; between the U-shaped portion 2' and the arms 7 there is defined an obtuse angle G, not shown.

The U-shaped portion 2' contains, near each one of its parallel sides, a hinge 5 with a possible clutch 4, the latter comprising a pair of discs and a knob 6 suitable for tightening a disc against the opposed disc. The hinge 5 is interposed between the frame body 2 and the further frame body 3, and said hinge 5 enables said frame bodies to be angularly adjusted each other.

The extractable portion 8 can be received for a longer or shorter portion of its length into the arm 7 and can be fixed at the prearranged position by means of a bolt, not shown, suitable for being positioned at one of the through holes 9.

Thus, the length of every arm 7 can be changed and in particular can be made suitable for being mounted on portions of the vehicle that, due to their extend, would be otherwise unreachable.

The extractable portion 8 further comprises an anchoring appendage 10, terminating with a curved end 11 suitable for coupling with a bottom edge E' of the rear door E or a boot cowling, not shown, of a vehicle D.

Near the ends of the arms 7 adjacent to the rear bumper, not shown, of the vehicle D, there is placed a C-shaped element 12, arranged so as to have its longer rectilinear portion facing in the opposed direction with respect to the rear door E. The C-shaped element 12 engages with each of the arms 7 by means of a further hinge 5', comprising a further clutch 4' and a further knob 6'. The hinge 5' enables the C-shaped element 12 to be moved from a retracted position F to an extended position F', represented by a dashed line. That enables to prevent that a particularly voluminous object mounted on the luggage carrier, for example a bicycle, can accidentally hit and then damage the surface of the rear door E or of the rear bumper, not shown, of the vehicle D.

The further frame body 3, as depicted in the Figures 1 to 3, shows a further U-shaped portion 3', whose two ends extend, by means of two curved sections 13, over two brackets 13'; each of the brackets 13' defines with the U-shaped portion 3' a further obtuse angle G', not shown. Each of the brackets 13' further contains a set of grooves 14a, suitable for being used advantageously as a rack 14 whereon bicycles, having frame provided with central crossbar, can be received. With the rack 14 there is associated a tightening tape 14b suitable for holding in position the frame crossbar, received in every groove 14a.

The hinges 5 lie arranged at the intersection between the two portions of the further frame body 3 that are contained between the two curved sections 13 and the two racks 14.

The further frame body 3 accommodates in its further U-shaped portion 3' at least a resting element 15, preferably in form of resilient cylinder having smooth surface; by means of the resting element 15 the further frame body 3 can be applied on the read door E without damaging the external surface of the latter.

Near the border between the further U-shaped portion 3' and each one of the bracket 13', a section of belt 16 is fixed with the further frame body 3 by means of a bolt 17. The unconstrained end of the elastic belt 16 comprises a further curved end 18, suitable for anchoring on an upper edge C of the rear door E or the boot cowling, not shown, of a vehicle D.

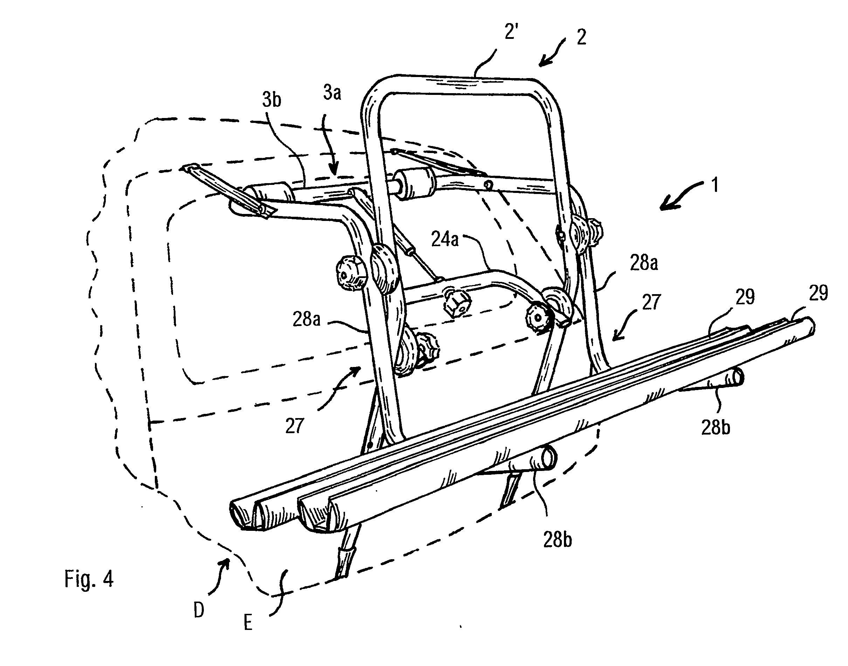

With reference to Figure 4, a preferred version of the luggage carrier 1 is provided, wherein the further frame body 3a comprises, instead of the brackets 14, another further U-shaped portion 3b extending, at both the ends, over an L-shaped loading element 27. Each one of the L-shaped loading elements 27 comprises a vertical bar 28a and a horizontal bar 28b, mutually connected at right angle. Each one of the vertical arms 28a engages with the frame body 2 by means of the hinge 5 previously described. The two horizontal bars 28b receive a pair of profiled elements 29, orthogonally arranged with respect to said horizontal bars 28b and having a roughly C-shaped section. With such advantageous version of the luggage carrier 1 bicycles can also be transported with frame unprovided with central crossbar, such as for example the ladies' bicycles.

The frame body 2 and the further frame body 3 are further connected by means of a configuration varying device L. With reference to Figure 1, such configuration varying device L comprises a pair of screw tie rods 19. Each one of the screw tie rods 19 comprises an adjusting screw 20 received into an internal thread or sleeve 21; the end of the adjusting screw 20, lying outside the sleeve 21, is further connected to a knob 22.

The end of each screw tie rod 19 comprising the knob 22 is connected with the frame body 2 near the arm 7 at its own side. The end of the screw tie rod 19 opposing that one comprising the knob 22 is connected with the further frame body 3 near the vertex of the obtuse angle G' defined between the curved section 13 and the further U-shaped portion 3'. All said connections are obtained by means of further bolts 30. In the luggage carrier 1 so assembled, an angle H results included between the frame body 2 and the further frame body 3.

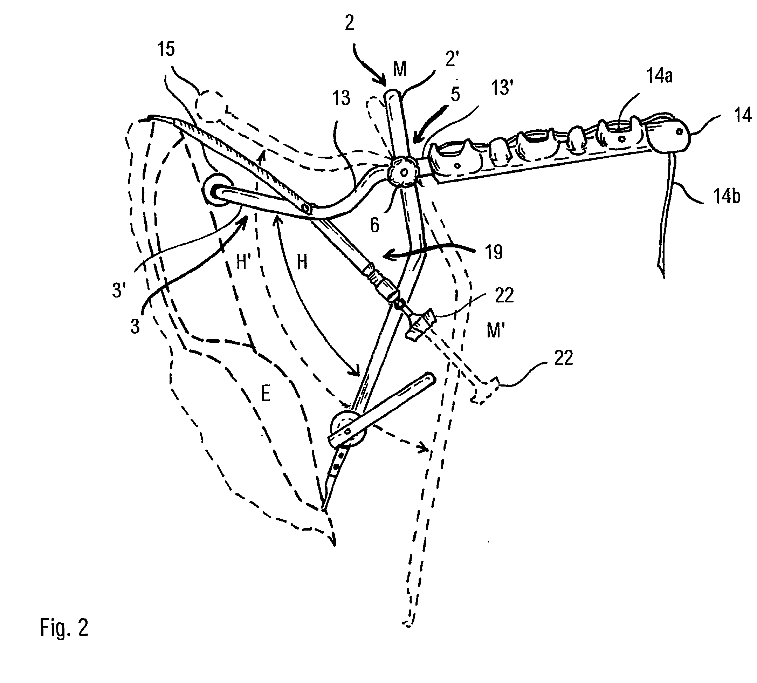

By acting on the knobs 22 of the configuration varying device L (see Figure 2) and then on the adjusting screw 20, the configuration of the luggage carrier 1 can be varied so as to be brought from any open starting position M', indicated by means of a dashed line, to a mounting position M, indicated by means of a full line, or vice versa.

Thus, the screw tie rod 19 is shortened, or respectively extended, so as to transform the angle H, into a further angle H', respectively smaller or greater than H. Such angular movement enables the configuration of the luggage carrier 1 to be varied, so as to be modified according to the size and the shape of the rear door E. In order to reduce the angle H to a further angle, not shown, smaller than H, it is sufficient to tighten the adjusting screw 21, so that shortening of the screw tie rod 19 is obtained. The possibility of properly fitting the configuration of the luggage carrier 1 to a plurality of shapes and sizes of vehicles results apparent by simply acting on the screw tie rod 19. In addition, the arrangement of the screw tie rod 19 is such to make said screw tie rod 19 easy to be handled by the user.

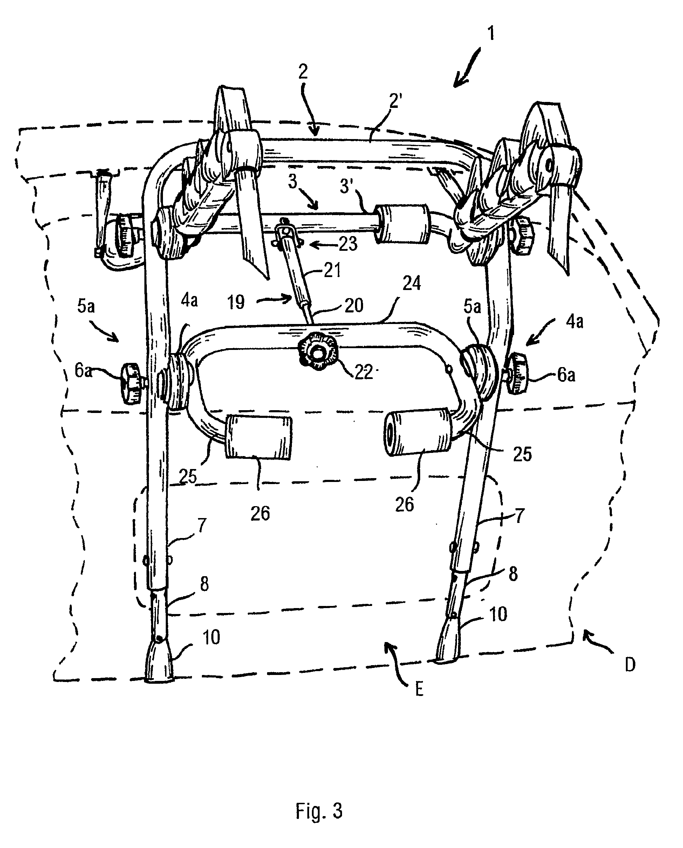

With reference to the Figures 3 and 4, it is possible to carry out the configuration adjusting device L so as to comprise a single screw tie rod 19. The end of the screw tie rod 19 opposed to the knob 22 is constrained near the middle region of the further U-shaped portion 3' of the further frame body 3 by means of a fork joint 23. The end of the adjusting screw 20 comprising the knob 22 passes through the thickness of a further C-shaped element 24, oriented so as to have the longer rectilinear side bordering the rear door E and comprising two end segments 25, each one accommodating a supporting element 26, implemented in a similar manner as the resting elements 15 previously described.

The end segments 25 operate so as to maintain the load in a stable position during the motion of the vehicle D and to prevent the accidental contact thereof with the external surface of the rear door E. The supporting elements 26 prevent the occurrence of possible damages for the transported objects. The further C-shaped element 24 is connected with the arms 7 of the rod element 2 by means of a pair of further other hinges 5a, each of which comprises a further other knob 6a and a further other clutch 4a. With reference to the Figure 4, in the version of the luggage carrier 1 equipped by using the further frame body 3a, the further C-shaped element 24 is replaced by another further C-shaped element 24a. Such another further C-shaped element 24a is unprovided with end segments 25 and further supporting elements 26, since the load accommodated on the luggage carrier 1 is firmly positioned on the L-shaped element 27 included in the other further frame body 3a, and such positioning prevents per se the contact of the load with the external surface of the rear door E of the vehicle D.

## Claims

1. Apparatus for transporting loads, suitable for being mounted on a vehicle (D), comprising first frame body means (2) and second frame body means (3) that are mutually coupled by hinge means (5) and are arranged for being associated with opposite edges (C, E') of a door (E) of said vehicle (D) by anchoring means (10, 11, 16, 18), said anchoring means (10, 11, 16, 18) comprising belt means (16), configuration varying means (L) interconnecting said first frame body means (2) and said second frame body means (3) and arranged for varying the mutual angular position of said first frame body means (2) and said second frame body means (3) so as to enable a stable anchoring to said vehicle (D), **characterised in that**, said anchoring means (10, 11, 16, 18) further comprises hooked end portions (10, 11) of said first frame body means (2) arranged for engaging an edge (E') of said opposite edges (C, E').

2. Apparatus according to claim 1, wherein said first frame body means (2) and said second frame body means (3) form an integral body with load supporting means (14; 27).

3. Apparatus according to claim 2, wherein said load supporting means (14; 27) is defined on extensions of said second frame body means (3) beyond said hinge means (5).

4. Apparatus according to any preceding claim, wherein said first frame body means (2) comprises a U-shaped portion (2').

5. Apparatus according to claim 4, wherein said U-shaped portion (2') extends over arm means (7).

6. Apparatus according to claim 5, wherein said U-shaped portion (2') and said arm means (7) are arranged so as to define an obtuse angle (G).

7. Apparatus according to claim 5, or 6, wherein said arm means (7) terminates with end anchoring appendix means (10).

8. Apparatus according any preceding claim, wherein said second frame body means (3) comprises a further U-shaped portion (3').

9. Apparatus according to claim 8, wherein said further U-shaped portion (3') comprises resting means (15) of shockproof material.

10. Apparatus according to claim 8 or 9, as appended to claim 2, comprising, in said load supporting means (14; 27), bracket means (13') arranged on the extension of said further U-shaped portion (3').

11. Apparatus according to claim 10, wherein said bracket means (13') and said further U-shaped portion (3') are arranged so as to define a further obtuse angle (G').

12. Apparatus according to any preceding claim, wherein said hinge means (5) incorporates clutch blocking means (4).

13. Apparatus according to any one of claims 10 to 12, wherein a curved portion (13) is comprised between said bracket means (13') and each end of said further U-shaped portion (3').

## Patentansprüche

1. Vorrichtung zum Transportieren von Lasten, die zur Befestigung an ein Fahrzeug (D) geeignet ist, mit ersten Rahmenkörpermitteln (2) und zweiten Rahmenkörpermittel (3), die über Gelenkmittel (5) miteinander gekoppelt sind, und die angeordnet sind, um über verankerungsmittel (10, 11, 16, 18) mit einander gegenüberliegenden Kanten (C, E') einer Tür (E) des Fahrzeugs (D) verbunden zu werden, wobei die Verankerungsmittel (10, 11, 16, 18) Riemenmittel (16) aufweisen, und mit Aufbau-variierenden Mitteln (L), die die ersten Rahmenkörpermittel (2) und die zweiten Rahmenkörpermittel (3) miteinander verbinden und die ausgebildet sind, um die beiderseitige winklige Position der ersten Körperrahmenmittel (2) und der zweiten Körperrahmenmittel (3) zu variieren, wodurch eine stabile Verankerung an das Fahrzeug (D) stattfinden kann, **dadurch gekennzeichnet, dass** die Verankerungsmittel (10, 11, 16, 18) ferner hakenförmige Endabschnitte (10, 11) der ersten Rahmenkörpermittel (2) aufweisen, die ausgebildet sind, um eine Kante (E') der gegenüberliegenden Kanten (C, E') zu erfassen.

2. Vorrichtung nach Anspruch 1, wobei die ersten Rahmenkörpermittel (2) und die zweiten Rahmenkörpermittel (3) einen selbsttragenden Körper mit Lasttragemitteln (14; 27) bilden.

3. Vorrichtung nach Anspruch 2, wobei die Lasttragemittel (14; 27) auf Verlängerungen der zweiten Rahmenkörpermittel (3) über die Gelenkmittel (5) hinaus festgelegt sind.

4. Vorrichtung nach einem der vorstehenden Ansprüche, wobei die ersten Rahmenkörpermittel (2) einen U-förmigen Abschnitt (2') aufweisen.

5. Vorrichtung nach Anspruch 4, wobei sich der U-förmige Abschnitt (2') auf Armmittel (7) erstreckt.

6. Vorrichtung nach Anspruch 5, wobei der U-förmige Abschnitt (2') und die Armmittel (7) so angeordnet sind, dass sie einen stumpfen Winkel (G) festlegen.

7. Vorrichtung nach Anspruch 5 oder 6, wobei die Armmittel (7) mit Endansatzmitteln zum Verankern (10) abschließen.

8. Vorrichtung nach einem der vorstehenden Ansprüche, wobei die zweiten Rahmenkörpermittel (3) einen weiteren U-förmigen Abschnitt (3') aufweisen.

9. Vorrichtung nach Anspruch 8, wobei der weitere U-förmige Abschnitt (3') Stützmittel (15) aus einem stoßfestem Material aufweist.

10. Vorrichtung nach Anspruch 8 oder 9 in Abhängigkeit von Anspruch 2, wobei die vorrichtung in den Lasttragemitteln (14; 27) Tragarmmittel (13') aufweist, die an der Verlängerung des weiteren U-förmigen Abschnitts (3') angeordnet sind.

11. Vorrichtung nach Anspruch 10, wobei die Tragarmmittel (13') und der weitere U-förmige Abschnitt (3') so ausgebildet sind, dass sie einen weiteren stumpfen Winkel (G') festlegen.

12. Vorrichtung nach einem der vorstehenden Ansprüche, wobei die Gelenkmittel (5) Kopplungsblockiermittel (4) mit einschließen.

13. Vorrichtung nach einem der Ansprüche 10 bis 12, wobei zwischen den Tragarmmitteln (13') und jedem Ende des weiteren U-förmigen Abschnitts (3') ein gekrümmter Abschnitt (13) angeordnet ist.

## Revendications

1. Dispositif pour le transport de charges, adapté à un montage sur un véhicule (D), comprenant des premiers moyens (2) de corps de cadre et des deuxièmes moyens (3) de corps de cadre qui sont mutuellement accouplés par des moyens de charnière (5) et sont agencés pour être associés à des bords opposés (C, E') d'une porte (hayon) (E) dudit véhicule (D) par des moyens d'ancrage (10, 11, 16, 18), lesdits moyens d'ancrage (10, 11, 16, 18) comprenant des moyens de sangle (16), des moyens (L) de modification de configuration reliant lesdits premiers moyens (2) de corps de cadre et lesdits deuxièmes moyens (3) de corps de cadre et agencés pour modifier la position angulaire mutuelle desdits premiers moyens (2) de corps de cadre et desdits deuxièmes moyens (3) de corps de cadre afin de permettre un ancrage stable sur ledit véhicule (D), ***caractérisé en ce que*** lesdits moyens d'ancrage (10, 11, 16, 18) comprennent de plus des portions terminales recourbées en crochet (10, 11) desdits premiers moyens (2) de corps de cadre agencées pour engager un bord (E') desdits bords opposés (C, E').

2. Dispositif selon la revendication 1, dans lequel lesdits premiers moyens (2) de corps de cadre et lesdits deuxièmes moyens (3) de corps de cadre forment un corps d'un seul tenant avec des moyens (14 ; 27) de support de charges.

3. Dispositif selon la revendication 2, dans lequel lesdits moyens de support de charges (14 ; 27) sont définis sur des prolongements desdits deuxièmes moyens (3) de corps de cadre situés au-delà desdits moyens de charnière (5).

4. Dispositif selon l'une quelconque des revendications précédentes, dans lequel lesdits premiers moyens (2) de corps de cadre comportent une portion (2') en U.

5. Dispositif selon la revendication 4, dans lequel ladite portion (2') en U s'étend au-dessus de moyens de bras (7).

6. Dispositif selon la revendication 5, dans lequel ladite portion (2') en U et lesdits moyens de bras (7) sont agencés de manière à définir un angle obtus (G).

7. Dispositif selon la revendication 5 ou 6, dans lequel lesdits moyens de bras (7) se terminent avec des moyens d'appendice d'ancrage (10) d'extrémité.

8. Dispositif selon l'une quelconque des revendications précédentes, dans lequel lesdits deuxièmes moyens (3) de corps de cadre comprennent une portion en U supplémentaire (3').

9. Dispositif selon la revendication 8, dans lequel ladite portion en U supplémentaire (3') comprend des moyens d'appui (15) en matériau résistant aux chocs.

10. Dispositif selon les revendications 8 ou 9, telles que s'ajoutant à la revendication 2, comprenant, dans lesdits moyens (14 ; 27) de support de charges, des moyens de console (13') ménagés sur le prolongement de ladite portion en U supplémentaire (3').

11. Dispositif selon la revendication 10, dans lequel lesdits moyens de console (13') et ladite autre portion (3') en U sont agencés de manière à définir un angle obtus supplémentaire (G).

12. Dispositif selon l'une quelconque des revendications précédentes, dans lequel lesdits moyens de charnière (5) englobent des moyens (4) de serrage à griffes.

13. Dispositif selon l'une quelconque des revendications 10 à 12, dans lequel une portion incurvée (13) est comprise entre lesdits moyens de console (13') et chaque extrémité de ladite autre portion (3') en U.
